# EUROPÄISCHE PATENTSCHRIFT

(11) **EP 1 313 628 B1**
(45) Veröffentlichungstag und Bekanntmachung des Hinweises auf die Patenterteilung: **10.10.2012**
(21) Anmeldenummer: 01976094.1
(22) Anmeldetag: 16.08.2001
(51) Int. Cl.: B60L 11/02, B60L 11/12, B60R 16/02

(54) **VERFAHREN ZUM BETRIEB EINES ANTRIEBES MIT EINER VERBRENNUNGSMASCHINE UND EINER ELEKTRISCHEN MASCHINE**
METHOD FOR OPERATING A DRIVE WITH AN INTERNAL COMBUSTION ENGINE AND AN ELECTRIC MACHINE
PROCEDE PERMETTANT DE FAIRE FONCTIONNER UN MECANISME D'ENTRAINEMENT AVEC UN MOTEUR A COMBUSTION INTERNE ET UNE MACHINE ELECTRIQUE

(30) Priorität: 28.08.2000 EP 00118614
(43) Veröffentlichungstag der Anmeldung: 28.05.2003
(73) Patentinhaber: Continental Automotive GmbH, 30165 Hannover (DE)
(72) Erfinder: DEHRMANN, Uwe, 97076 Würzburg (DE); FALCO, Marco, 97070 Würzburg (DE); JOHANNING, Hans-Peter, 61449 Steinbach (DE)
(86) Internationale Anmeldenummer: PCT/EP2001/009474
(87) Internationale Veröffentlichungsnummer: WO 2002/018169

(56) Entgegenhaltungen:
- EP-A- 0 876 554
- DE-A- 19 752 661
- DE-A- 19 801 542
- PATENT ABSTRACTS OF JAPAN vol. 1999, no. 13, 30. November 1999 (1999-11-30) & JP 11 223140 A (HONDA MOTOR CO LTD), 17. August 1999 (1999-08-17)

## Beschreibung

Die Erfindung bezieht sich auf ein Verfahren zum Betrieb eines Antriebes mit einer Verbrennungsmaschine und einer elektrischen Maschine gemäß Oberbegriff des Patentanspruchs 1; ein derartiges Verfahren ist z.B. aus der DE 197 52 661 A1 bekannt.

Die DE 197 52 661 A1 beschreibt ein Bordnetz für ein Kraftfahrzeug mit einem kombinierten Antrieb mittels einer elektrischen Maschine und einer Verbrennungsmaschine, die auf den gleichen Antriebsstrang wirken. Die elektrische Maschine unterstützt z.B. einerseits als Motor den Startvorgang der Verbrennungsmaschine und gibt andererseits als Generator Ladeleistung an eine Fahrzeug-Betriebsbatterie und gegebenenfalls an einen zusätzlichen Kurzzeit-Startkondensator ab. Um im Generatorbetrieb des Starter-Generators mit möglichst großem Wirkunggrad und somit mit möglichst geringer Belastung der Energiespeicher bzw. Energieversorger arbeiten zu können, sind die elektrischen Verluste sowohl im Umrichter als auch in der für den Starter-Generator vorgesehenen Asynchronmaschine in vorteilhafter Weise dadurch gering gehalten, daß in einer feldorientierten Regelung das innere Moment der Asynchronmaschine des Starter-Generators nach dem Prinzip der verlustoptimalen Steuerung bzw. Regelung des Rotorflusses durch entsprechende Adaptierung des Magnetisierungsstromes in Abhängigkeit von einem entsprechend dem jeweils geforderten Antriebsdrehmoment ermittelten Wirkstrom eingestellt wird.

Gemäß Aufgabe vorliegender Erfindung soll mit einfachen Mitteln die Umweltbelastung eines kombinierten Antriebes mit gemischtem Elektromotor-Verbrennungsmotor, insbesondere eines Kraftfahrzeuges mit entsprechendem Hybridantrieb, weiter gesenkt werden können.

Ausgehend von der Erkenntnis, dass durch eine verkürzte Warmlaufphase der Kraftstoffverbrauch und die Abgasbelastung gemindert werden können, ist erfindungsgemäß, vorzugsweise im Kaltstartbetrieb, die elektrische Maschine als zusätzliche Last der Verbrennungsmaschine im Sinne einer gezielten Überhöhung von dessen Verlustwärme im Vergleich zu einem üblichen Fahrbetrieb eingesetzt; in diesem Sinne erreicht die Verbrennungsmaschine schneller ihren optimalen, durch geringen Verbrauch und geringe Abgas-Umweltbelastung gekennzeichneten Betriebspunkt; bei entprechender kühler Außentemperatur kann gleichzeitig eine schnellere Aufheizung des Innenraumes eines Kraftfahrzeuges unter Verzicht auf eine gesonderte Zusatzheizung erreicht werden.

In vorteilhafter Weise kann die bei gezieltem Betrieb der Verbrennungsmaschine außerhalb ihres optimalen Betriebspunktes auch die in der entsprechend die elektrische Maschine steuernden Elektronik entstehende Verlustwärme insbesondere zur Aufheizung des Innenraums eines von dem Antrieb angetriebenen Kraftfahrzeuges ausgenutzt werden.

Es ist vorgesehen, die elektrische Maschine mit einem gegenüber dem aufgrund von Soll-Antriebsmoment und Drehzahl optimalen Wirkungsgrad jeweils verschlechterten Wirkungsgrad zu betreiben; die dabei in der elektrischen Maschine selbst entstehende Zusatzwärme kann vorteilhafterweise zur Aufheizung der Verbrennungsmaschine und/oder zur Zusatzbeheizung des Innenraums des Kraftfahrzeuges mitbenutzt werden.

Die Einstellung eines bewusst verschlechterten Wirkungsgrades der elektrischen Maschine kann z.B. bei einer Asynchronmaschine mit feldorientierter Magentflußregelung, die z.B. aus der eingangs genannten DE 197 52 661 A1 an sich bekannt ist, durch gezielte Veränderung des Magnetisierungsstromes von dem im bekannten Fall zur Minimierung der elektrischen Verluste angestrebten Wert erreicht werden.

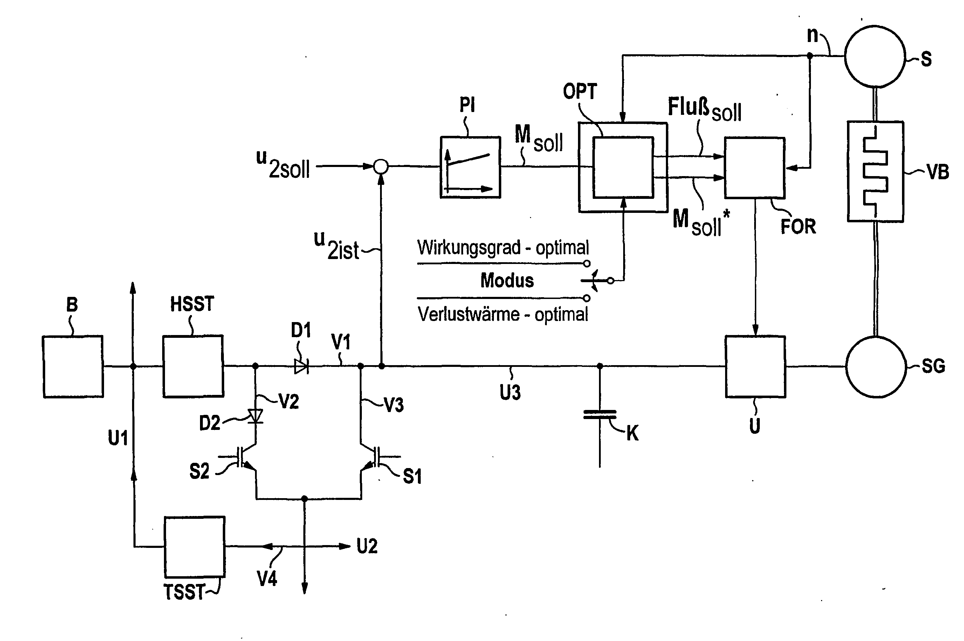

Die Figur zeigt ausgehend von dem aus der DE 197 52 661 A1 bekannten Brodnetz einen Antrieb für einen Kraftfahrzeug-Hybridantrieb mit einer Verbrennungsmaschine VB und einer elektrischen Maschine in Form einer feldorientiert geregelten Asynchronmaschine als Starter-Generator SG.

Das in der Figur dargestellte Bordnetz kann grundsätzlich aufgeteilt werden in einen ersten Bordnetzteil U1 mit einem Spannungsniveau von z.B. 12 Volt entsprechend der Spannung der Batterie B, in einen zweiten Bordnetzteil U2 zur Versorgung von Hochstrom-Verbrauchern mit einem Spannungsniveau von z.B. 180 Volt, in einen dritten Bordnetzteil U3 mit einem Spannungsniveau von z.B. 400 Volt zur Ladung eines Start-Kondensators K zum Starten eines Verbrennungsmotors VB mittels eines über einen Umrichter U speisbaren Starter-Generators SG; der dritte Bordnetzteil U3 dient im Generatorbetrieb des Starter-Generators SG weiterhin dazu, dessen Ausgangsspannung mit einem über den Umrichter U eingeregelten Spannungsniveau von ca. 180 Volt an das Spannungsniveau des zweiten Bordnetzteils U2 anzupassen. Ein Regelungsteil dient zum energieoptimalen Betrieb der als Starter-Generator SG vorgesehenen Asynchronmaschine, vorzugsweise mit Käfigläufer.

Im Zuge der Startvorbereitung des Verbrennungsmotors VB über den dann als Asynchronmotor arbeitenden Starter-Generator SG wird, z.B. nach Betätigung des Zündschlüssels, mit Hilfe eines Hochsetzstellers HSST (DC-DC-Wandler) über die Verbindung V1 ein Start-Kondensator K im dritten Bordnetzteil U3 aus der Batterie B auf eine Spannung von ca. 400 Volt aufgeladen. Schalter S1 bzw.S2 in der Verbindung V2 bzw.V3 sind während dieser Ladephase des Start-Kondensators K geöffnet. Durch eine Diode D1 in der Verbindung V1 ist diese in Gegenrichtung zur Batterie B gesperrt.

Beim eigentlichen Startvorgang kann der Verbrennungsmotor VB mit Hilfe des Asynchronmotors des Starter-Generators SG auf eine Drehzahl von ca. 400-700 U/min hochgefahren werden; im Falle einer elektronischen Ventilsteuerung sind die Ventile zweckmäßigerweise während des Hochfahrens voll geöffnet und damit kompressionslos gestellt. Sobald der Verbrennungsmotor VB eine vorgesehene Drehzahl bzw. den erforderlichen Drehwinkel seiner Kurbelwelle erreicht hat, kann der Verbrennungsmotor VB bei normaler Ventilstellung gezündet und der Starter-Generator SG antriebsseitig abgeschaltet werden. Falls beim Startvorgang die im Start-Kondensator K vorgespeicherte Energie nicht ausreicht, kann für den Fall, daß das Spannungsniveau des dritten Bordnetzteils U3 kleiner ist als das Spannungsniveau des zweiten Bordnetzteils U2, zusätzlich Energie aus der Batterie B über den Hochsetzsteller HSST und die Verbindung V1 für den über den Umrichter U gespeisten Starter-Generator SG bezogen werden.

Nach dem Zündvorgang des Verbrennungsmotors VB kann der Starter-Generator SG in den Generatorbetrieb übergehen. Dabei wird das Spannungsniveau des dritten Bordnetzteils U3 als Zwischenkreisspannung über den Umrichter U und den zweckmäßigerweise als Zwischenkreiskondensator benutzten Start-Kondensator K auf das Spannungsniveau des zweiten Bordnetzteils U2, von z.B. auf 180 Volt, geregelt. Nach Erreichen des Spannungsniveaus des Bordnetzteils U2 wird der Schalter S2 geöffnet und somit die Verbindung V2 unterbrochen und der Schalter S1 geschlossen und somit die Verbindung V3 vom Bordnetzteil U3 zum Bordnetzteil U2 hergestellt; der Hochsetzsteller HSST wird zweckmäßigerweise außer Betrieb gesetzt. Der Starter-Generator SG arbeitet nunmehr im Generatorbetrieb und versorgt über die geregelte Zwischenkreisspannung des Bordnetzteils U3 das Bordnetzteil U2 und die daran angeschlossenen Hochstrom-Verbraucher.

Um im Generatorbetrieb des Starter-Generators SG mit möglichst großem Wirkunggrad und somit mit möglichst geringer Belastung der Energiespeicher bzw. Energieversorger arbeiten zu können, sind die elektrischen Verluste sowohl im Umrichter U als auch in der für den Starter-Generator SG vorgesehenen Asynchronmaschine in vorteilhafter Weise dadurch gering gehalten, daß in einer feldorientierten Regelung FOR das innere Moment Mᵢ₁ der Asynchronmaschine des Starter-Generators SG nach dem Prinzip der verlustoptimalen Steuerung bzw. Regelung des Rotorflusses durch entsprechende Adaptierung des Magnetisierungsstromes in Abhängigkeit von einem entsprechend dem jeweils geforderten Antriebsdrehmoment ermittelten Wirkstrom eingestellt wird.

Erfindungsgemäß kann durch abweichende Einstellung von dem zuvor gemäß der DE 197 52 661 A1 hinsichtlich eines optimalen Wirkungsgrades vorgesehenen Magnetisierungsstrom eine zusätzliche Last der Verbrennungsmaschine VB im Sinne einer gezielten Erhöhung von deren Verlustwärme, insbesondere zur Verkürzung der Warmlaufphase, eingestellt werden. Dazu ist ein Optimierer OPT zur Umschaltung zwischen bekanntem Betrieb mit optimalem Wirkungsgrad einerseits und erfindungsgemäß davon abweichendem Betrieb im Sinne einer überhöhten Verlustleistung vorgesehen. Die Vorgabe eines entsprechenden Sollwertes für die feldorientierte Regelung FOR kann durch Einstellung eines entsprechenden Soll-Drehmomentes Mₛₒₗₗ^{*} oder eines entsprechenden Magnetisierungsstromes Flußₛₒₗₗ erfolgen. Zur jeweils drehzahlentsprechenden Regelung ist über einen Drehzahlsensor S die Drehzahl der Verbrennungsmaschine VB an den Optimierer OPT als auch an die feldorientierte Regelung FOR gegeben.

## Patentansprüche

1. Verfahren zum Betrieb eines Antriebs mit einer Verbrennungsmaschine und einer elektrischen Maschine, insbesondere einer Asynchronmaschine, **gekennzeichnet durch** einen Betrieb der elektrischen Maschine als zusätzliche Last der Verbrennungsmaschine im Sinne einer gezielten Überhöhung der Verlustwärme der Verbrennungsmaschine,
wobei die elektrische Maschine, insbesondere in Form einer Asynchronmaschine mit feldorientierter Regelung, als Generator mit einem von einer wirkungsgradoptimalen Einstellung abweichenden Magnetisierungsstrom betrieben wird.

2. Verfahren nach Anspruch 1, **gekennzeichnet durch** einen Betrieb der elektrischen Maschine als Starter-Generator.

3. Verfahren nach zumindest einem der Ansprüche 1-2, **gekennzeichnet durch** eine Verwendung für einen Hybrid-Anrieb, insbesondere zum Antrieb eines Kraftfahrzeuges.

4. Verfahren nach zumindest einem der Ansprüche 1-3, **gekennzeichnet durch** Verwendung der zusätzlichen Verlustwärme der Verbrennungsmaschine zur Verkürzung der Warmlaufphase der Verbrennungsmaschine.

5. Verfahren nach zumindest einem der Ansprüche 1-4, **gekennzeichnet durch** eine Verwendung der zusätzlichen Verlustwärme der Verbrennungsmaschine zur Erhöhung der Innentemperatur eines von dem Antrieb angetriebenen Fahrzeugs.

6. Verfahren nach zumindest einem der Ansprüche 1-4, **gekennzeichnet durch** eine Verwendung der zusätzlichen Verlustwärme der die elektrische Maschine steuerenden Elektronik zur Erhöhung der Innentemperatur eines von dem Antrieb angetriebenen Fahrzeugs.

## Claims

1. Method for operating a drive with an internal combustion engine and an electric machine, in particular an asynchronous machine, **characterized by** operating the electric machine as an additional load of the internal combustion engine in order to excessively increase the heat loss of the internal combustion engine in a selective fashion, wherein the electric machine, in particular in the form of an asynchronous machine with field oriented control, is operated as a generator with a magnetizing current which differs from a setting with optimum efficiency.

2. Method according to at least one of Claim 1, **characterized by** operating the electric machine as a starter-generator.

3. Method according to at least one of Claims 1 to 2, **characterized by** the use for a hybrid drive, in particular for driving a motor vehicle.

4. Method according to at least one of Claims 1 to 3, **characterized by** the use of the additional heat loss of the internal combustion engine to shorten the warming-up phase of the internal combustion engine.

5. Method according to at least one of Claims 1 to 4, **characterized by** the use of the additional heat loss of the internal combustion engine to increase the internal temperature of the vehicle which is driven by the drive.

6. Method according to at least one of Claims 1 to 4, **characterized by** the use of the additional heat loss of the electronics controlling the electric machine in order to increase the internal temperature of a vehicle which is driven by the drive.

## Revendications

1. Procédé de fonctionnement d'un entraînement comprenant un moteur à combustion et un moteur électrique, en particulier un moteur asynchrone, **caractérisé par** un fonctionnement du moteur électrique en tant que charge supplémentaire du moteur à combustion dans le but d'une augmentation ciblée de la chaleur de déperdition du moteur à combustion,
dans lequel le moteur électrique, en particulier sous la forme d'un moteur asynchrone comprenant une régulation à orientation de champ, est utilisé comme générateur comprenant un courant d'aimantation s'écartant d'un réglage optimal sur le plan du degré d'efficacité.

2. Procédé selon la revendication 1, **caractérisé par** un fonctionnement du moteur électrique en tant que générateur de démarreur.

3. Procédé selon au moins l'une des revendications 1 et 2, **caractérisé par** une utilisation pour un entraînement hybride, en particulier pour l'entraînement d'un véhicule automobile.

4. Procédé selon au moins l'une des revendications 1 à 3, **caractérisé par** l'utilisation de la chaleur de déperdition supplémentaire du moteur à combustion pour le raccourcissement de la phase de préchauffage du moteur à combustion.

5. Procédé selon au moins l'une des revendications 1 à 4, **caractérisé par** une utilisation de la chaleur de déperdition supplémentaire du moteur à combustion pour l'augmentation de la température intérieure d'un véhicule entraîné par l'entraînement.

6. Procédé selon au moins l'une des revendications 1 à 4, **caractérisé par** une utilisation de la chaleur de déperdition supplémentaire du dispositif électronique commandant le moteur électrique pour l'augmentation de la température intérieure d'un véhicule entraîné par l'entraînement.
